# EUROPEAN PATENT SPECIFICATION

(11) **EP 3 982 038 B1**
(45) Date of publication and mention of the grant of the patent: **06.08.2025**
(21) Application number: 19931678.7
(22) Date of filing: 17.06.2019
(51) Int. Cl.: B60Q 1/24, F21S 43/27, G09F 19/18, G09F 21/04, F21S 43/14

(54) **AUTOMOBILE WELCOME LAMP**
FAHRZEUGBEGRÜSSUNGSLEUCHTE
FEU DE BIENVENUE DE VEHICULE

(30) Priority: 04.06.2019 CN 201910481435
(43) Date of publication of application: 13.04.2022
(73) Proprietor: Bayerische Motoren Werke Aktiengesellschaft, 80809 München (DE); Shenzen Xindi Technology Co., Ltd., Shenzhen City, Guangdong 518000 (CN)
(72) Inventor: ZHAO, Xiaoming, Shenzhen, Guangdong 518000 (CN); MARTIN, Mathias, Munich (DE); GUENTHER, Alf, Traunstein (DE)
(74) Representative: Wallinger Ricker Schlotter Tostmann
(86) International application number: PCT/CN2019/091609
(87) International publication number: WO 2020/243990

(56) References cited:
- EP-A1- 3 470 270
- WO-A1-2008/137634
- WO-A1-2014/089901
- WO-A1-2016/117255
- WO-A1-2018/193000
- WO-A2-2018/178268
- CN-U- 201 983 155
- CN-U- 202 947 048
- CN-U- 202 947 048
- CN-U- 205 678 553
- CN-U- 205 678 553
- CN-U- 210 004 310
- KR-B1- 101 882 907
- TR-A2- 201 810 651
- US-A1- 2017 122 539
- US-A1- 2019 137 677

## Description

### TECHNICAL FIELD

The invention relates to a welcome lamp, in particular to a welcome lamp with personalized customized patterns for automobiles.

### TECHNICAL BACKGROUND

With the progress of human society, economic development and gradually increasing people's living standard, automobiles have been widely applied in thousands of households, as an indispensable means of transportation for human beings, and they have also become the carrier for displaying fashion and personality. Therefore, the welcome lamp appears in market, when the car door is opened, the welcome lamp will project various patterns customized by the owner, brining an invisible sense of joy. The conventional welcome lamp is basically composed of a high-brightness LED light source, film recombination magnifying lens, lens fixing bracket and shell. The bright LED light source illuminates the film in the middle of the lens, and the film pattern is projected through the lens, which is similar to the slide projection principle.

In case, after a long period of use, the film may age and fade and need to be replaced, or the owner may need to change different patterns according to her/his own preferences, the existing pattern of the welcome lamp must be replaced by a new one, and most of the welcome lamps are inconvenient to disassemble and replace, requiring specialized technicians in doing so; and some improper operation may damage the door for replacement of the welcome lamp, therefore the projected pattern of the welcome lamp cannot be replaced at will, and replacement costs is high.

The document KR 101 882 907 B1 discloses a puddle lamp of an automobile outer mirror, which comprises: a light source emitting light; a light collecting lens collecting light emitted from the light source and positioned in a front area of the light source; a holder fixing the light collecting lens and assembled with a barrel having a plurality of lens units; and a logo mask formed between the barrel and the light source and displaying a certain pattern on the light irradiated to the outside of the automobile.

The document WO 2018/193000 A1 discloses a combined approach lamp and logo lamp apparatus for use in an external rear view assembly comprising at least one aperture, the apparatus comprising: a housing comprising a rear face and a front face with the at least one aperture; a printed circuit board (PCB) mounted adjacent the rear face, the printed circuit board further comprising a power connector, an electronic circuit, a first light source mounted in a first location on the printed circuit board and a second light source mounted in a second location on the printed circuit board; and a transparent lens component comprising a first lens portion and a second lens portion, wherein the housing and the lens component are formed, preferably as a two component moulded part, such that the first lens potion is orientated to focus light from the first light source and the second lens portion is orientated to focus light from the second light source via an optical assembly comprising a logo element, and the first lens portion is angled relative to a plane containing the PCB surface so that the distance from the first light source to an outer surface of the first lens portion is less than the distance from the second light source to an outer surface of the second lens portion, with, in use, the housing being mounted so that the first lens portion and the second lens portion are adjacent the at least one aperture in the side mirror housing.

### CONTENT OF THE INVENTION

The technical problem to be solved by the present invention: for the above-mentioned defects in the prior art, a technical solution adopted by the present invention is described as follows:
The invention provides an automobile welcome lamp, which comprises a shell, a LED lamp, a control circuit board installed in the shell, a lens barrel assembly and a pattern projection assembly, wherein the lens barrel assembly comprises an upper part of the lens barrel, a lower part of the lens barrel and the first groove arranged in the lower part of the lens barrel, wherein the first groove is used for placing the pattern projection assembly, and the lower part of the lens barrel is provided with a plurality of embossments or grooves; correspondingly, the upper part of the lens barrel is provided with a plurality of grooves or embossments; and the pattern projection assembly is placed in the first groove of the lower part of the lens barrel by the engagement of embossments and grooves, wherein the pattern projection assembly comprises an upper bracket, a lower bracket and a film sheet, wherein the lower bracket is provided with the second groove, and the film sheet is horizontally placed in the second groove.

The upper bracket and the lower bracket are clamped and fixed through protrusions and recesses.

The shell comprises a body and a face cover, wherein a notch is arranged on the side of the cavity for accommodating the lower part of the lens barrel in the body, and anti-slip teeth are arranged on the outer vertical wall of the lower part of the lens barrel, and a portion of the anti-slip teeth is exposed at the position corresponding to the notch.

The shell comprises a body and a face cover, wherein the face cover is provided with a through hole, and the lens barrel assembly passes through the through hole and enters the body to face the LED lamp.

It also includes a lens cover covering the through hole, which is provided with unlocking & locking mark, and a notch is provided in the face cover. When the lens cover rotates relative to the face cover until the unlocking mark is aligned with the notch on the face cover, the lens cover is separated from the face cover, and when the lens cover rotates relative to the face cover until the locking mark is aligned with the notch on the face cover, the lens cover is closed on the face cover.

Compared with the prior art, the invention is capable of conveniently replacing the film without damaging the car door and welcome lamp, saving time and costs.

### BRIEF DESCRIPTION OF THE DRAWINGS

Fig. 1 is a schematic view of external shape of the welcome lamp embodiment in the present invention;
Fig. 2 is an exploded schematic diagram of the welcome lamp embodiment in the present invention;
Fig. 3 is a schematic view of the external shape of the lens barrel assembly of the welcome lamp embodiment in the present invention;
Fig. 4 is an exploded schematic view of the lens barrel assembly of the welcome lamp embodiment in the present invention;
Fig. 5 is an exploded schematic view of the lens barrel assembly film assembly of the welcome lamp embodiment in the present invention; and
Fig. 6 is a structural schematic diagram of the upper part of the lens barrel of the lens barrel assembly the welcome lamp embodiment in the present invention.

### DETAILED DESCRIPTION OF THE VARIOUS EMBODIMENT

The preferred embodiment of the present invention is hereby described in details with reference to the accompanying drawings.

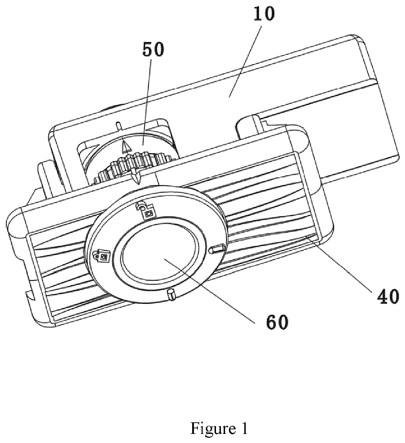

As shown in Fig. 1, an automobile welcome lamp includes a shell, an LED lamp 20, and a control circuit board 30 installed in the shell (such as PCBA board) and a lens barrel assembly 50, and the shell includes a body 10 and a face cover 40. The body 10 is provided with a radiator for radiating the LED lamp 20, and the control circuit board 30 is installed in the shell by means of a bracket. The face cover 40 is provided with a through hole and the lens barrel assembly 50 passes through the through hole and enters the body 10 to face the LED lamp 20. It also includes a lens cover 60 for shielding the through hole, and the lens cover 60 is provided with an unlocking mark 61 and a locking mark 6. The welcome lamp is installed on the car door. When the car door is opened, the pins on the PCBA board are powered on, the PCBA board starts to work, and the LED lamp is on. The light emitted by the LED lamp passes through the film and lens set, and then the film pattern is projected to the ground.

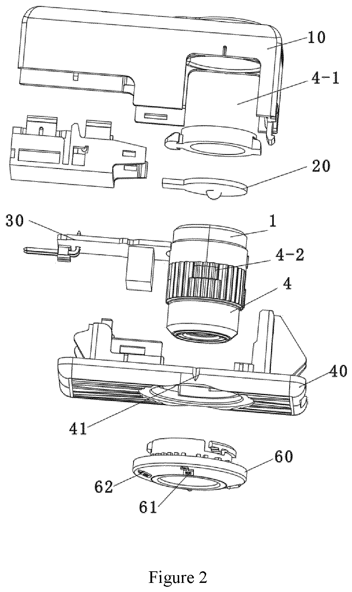

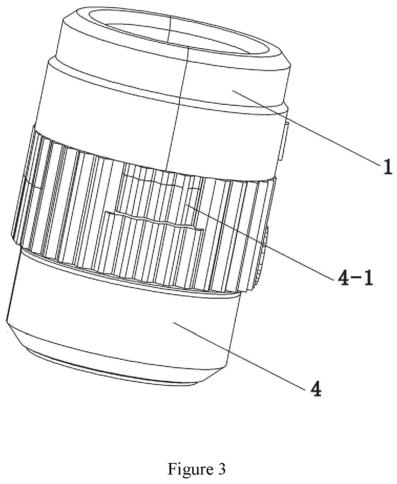

As shown in Fig. 2 to Fig. 6, the lens barrel assembly 50 includes a lens barrel upper part 1, a lens barrel lower part 4 and a first groove 5 arranged in the lens barrel lower part 4. The first groove 5 is used for placing the pattern projection assembly 2, and there is a foolproof design in the groove so as to avoid mounting backwards. A notch 4-1 is arranged on the side of the cavity for accommodating the lower part 4 of the lens barrel in the body 10, and an anti-slip tooth 4-2 is arranged on the outer vertical wall of the lower part of the lens barrel, and a part of the anti-slip tooth 4-2 is exposed at the position corresponding to the notch. This arrangement is convenient to rotate the lens barrel assembly 50 to adjust the direction of the pattern, as desired to user's satisfaction. The pattern projection assembly 2 includes an upper bracket 6 and a lower bracket 8. The upper bracket 6 can be marked with the "TOP" character. When assembling, the "TOP" character faces up. The lower bracket 8 is provided with the second groove 11, and the film sheet 7 is placed in the second groove 11. The lens barrel assembly 50 also includes a lens set including convex lenses arranged in the lens barrel, and the film is arranged between the two convex lenses.

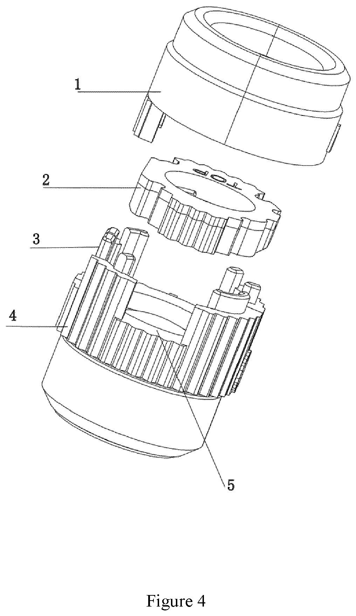

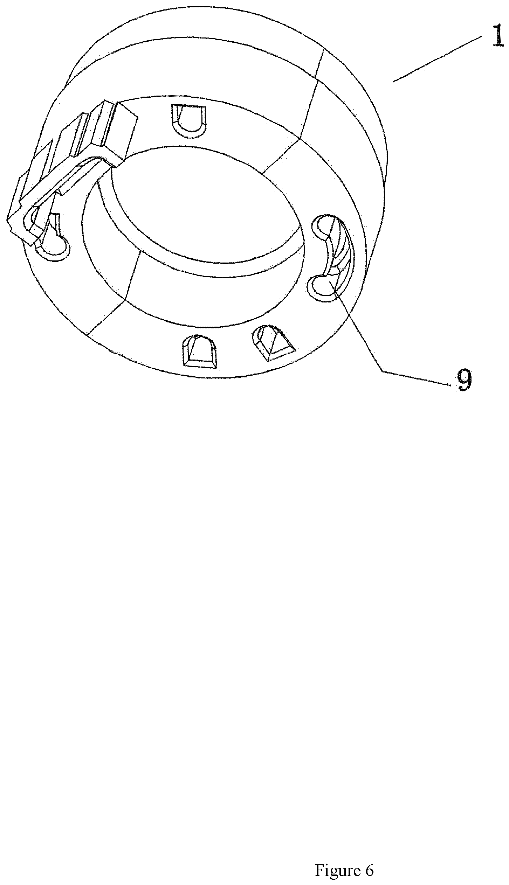

As shown in Fig. 4 and Fig. 6, the lower part 4 of the lens barrel is provided with a plurality of embossments 3, and the upper part 1 of the lens barrel is provided with a plurality of grooves 9 which are matched with the embossments 3; Alternatively, the lower part of the lens barrel 4 is provided with several grooves 9, and the upper part of the lens barrel 1 is provided with embossments 3 which are matched with the grooves 9. The pattern projection assembly 2 is fixed in the first groove 5 of the lower part 4 of the lens barrel, through the engagement of embossments 3 and grooves 9.

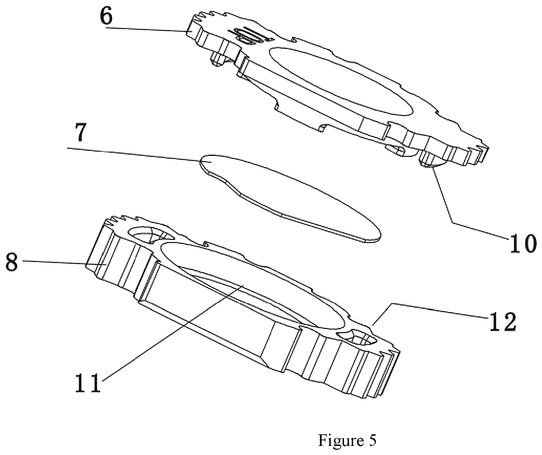

As shown in Fig. 5, the upper bracket 6 and the lower bracket 8 are engaged and fixed by a plurality of protrusions 10 and recesses 12, so that the film sheet 7 is effectively clamped between the upper bracket 6 and the lower bracket 8.

When the film needs to be replaced, it is available to unscrew the lens cover 60 of the product until the unlocking mark 61 is aligned with the notch of the product face cover 40 to make the lens cover separate from the face cover, then to take out the lens barrel assembly 50, separate the upper and lower parts of the lens barrel assembly 50, take out the original pattern projection assembly, and then put the new pattern projection assembly horizontally. Finally, insert the lens barrel assembly, then cover the lens cover, and screw until the locking mark 62 is aligned with the notch 41 of the product cover, then the replacement of the projection assembly is completed.

It should be understood that the above embodiment is only used to illustrate the technical solution of the present invention, without intention to limit the same. For those skilled persons in the art, the technical solution described in the above embodiment can be modified or some technical features can be substituted. These modifications and substitutions should be regarded as a part of protected claims attached hereto.

## Claims

1. An automobile welcome lamp, which comprises a shell, a LED lamp (20), a control circuit board installed in the shell, a lens barrel assembly (50) and a pattern projection assembly (2), wherein the lens barrel assembly comprises an upper part (1) of the lens barrel, a lower part (4) of the lens barrel and a first groove (5) arranged in the lower part (4) of the lens barrel, wherein the first groove (5) is used for placing the pattern projection assembly (2), and the lower part (4) of the lens barrel is provided with a plurality of embossments (3) or grooves (9);
correspondingly, the upper part (1) of the lens barrel is provided with a plurality of grooves (9) or embossments (3); and the pattern projection assembly (2) is placed in the first groove (5) of the lower part (4) of the lens barrel by the engagement of embossments (3) and grooves (9);
wherein the pattern projection assembly (2) comprises an upper bracket (6), a lower bracket (8) and a film sheet (7), and wherein the lower bracket (8) is provided with a second groove (11), and the film sheet (7) is horizontally placed in the second groove (11).

2. The automobile welcome lamp of Claim 1, wherein the upper bracket (6) and the lower bracket (8) are clamped and fixed through protrusions and recesses (12).

3. The automobile welcome lamp of Claim 1, wherein the shell comprises a body (10) and a face cover (40), wherein a notch is arranged on the side of the cavity for accommodating the lower part (4) of the lens barrel in the body (10), and wherein anti-slip teeth are arranged on the outer vertical wall of the lower part (4) of the lens barrel, and wherein a portion of the anti-slip teeth is exposed at the position corresponding to the notch.

4. The automobile welcome lamp of Claim 1, wherein the shell comprises a body (10) and a face cover (40), wherein the face cover (40) is provided with a through hole, and the lens barrel assembly (50) passes through the through hole and enters the body (10) to face the LED lamp (20).

5. The automobile welcome lamp of Claim 4, wherein the automobile welcome lamp also includes a lens cover (60) covering the through hole, which is provided with unlocking & locking mark, and wherein a notch is provided in the face cover (40), wherein, when the lens cover is rotated relative to the face cover (40) until the unlocking mark is aligned with the notch on the face cover (40), the lens cover (60) is separated from the face cover (40), and when the lens cover (60) is rotated relative to the face cover (40) until the locking mark is aligned with the notch on the face cover (40), the lens cover is closed on the face cover (40).

## Patentansprüche

1. Begrüßungsleuchte für ein Kraftfahrzeug, wobei die Begrüßungsleuchte für ein Kraftfahrzeug ein Gehäuse, eine LED-Leuchte (20), eine Steuerplatine, die in dem Gehäuse installiert ist, eine Linsentubusanordnung (50) und eine Anordnung (2) zum Projizieren eines Musters aufweist, wobei die Linsentubusanordnung einen oberen Teil (1) des Linsentubus, einen unteren Teil (4) des Linsentubus und eine erste Nut (5), die in dem unteren Teil (4) des Linsentubus angeordnet ist, aufweist, wobei die erste Nut (5) dazu verwendet wird, die Anordnung (2) zum Projizieren eines Musters zu platzieren, und wobei der untere Teil (4) des Linsentubus mit einer Mehrzahl von Erhebungen (3) oder Nuten (9) versehen ist; wobei der obere Teil (1) des Linsentubus entsprechend mit einer Mehrzahl von Nuten (9) oder Erhebungen (3) versehen ist; und wobei die Anordnung (2) zum Projizieren eines Musters in der ersten Nut (5) des unteren Teils (4) des Linsentubus durch den Eingriff der Erhebungen (3) und der Nuten (9) platziert ist;
wobei die Anordnung (2) zum Projizieren eines Musters eine obere Halterung (6), eine untere Halterung (8) und ein Filmblatt (7) aufweist, und wobei die untere Halterung (8) mit einer zweiten Nut (11) versehen ist, und wobei das Filmblatt (7) horizontal in der zweiten Nut (11) platziert ist.

2. Begrüßungsleuchte für ein Kraftfahrzeug nach Anspruch 1, wobei die obere Halterung (6) und die untere Halterung (8) durch Vorsprünge und Ausnehmungen (12) geklemmt und fixiert sind.

3. Begrüßungsleuchte für ein Kraftfahrzeug nach Anspruch 1, wobei das Gehäuse einen Körper (10) und eine stirnseitige Abdeckung (40) aufweist, wobei eine Kerbe auf der Seite des Hohlraums zur Aufnahme des unteren Teils (4) des Linsentubus in dem Körper (10) angeordnet ist, und wobei Antirutschzähne an der äußeren vertikalen Wand des unteren Teils (4) des Linsentubus angeordnet sind, und wobei ein Teil der Antirutschzähne an der Position, die der Kerbe entspricht, freigelegt ist.

4. Begrüßungsleuchte für ein Kraftfahrzeug nach Anspruch 1, wobei das Gehäuse einen Körper (10) und eine stirnseitige Abdeckung (40) aufweist, wobei die stirnseitige Abdeckung (40) mit einem Durchgangsloch versehen ist, und wobei die Linsentubusanordnung (50) durch das Durchgangsloch hindurchführt und in den Körper (10) eintritt, um der LED-Leuchte (20) gegenüberzuliegen.

5. Begrüßungsleuchte für ein Kraftfahrzeug nach Anspruch 4, wobei die Begrüßungsleuchte für ein Kraftfahrzeug ferner eine Linsenabdeckung (60) aufweist, welche das Durchgangsloch abdeckt, wobei die Linsenabdeckung (60) mit einer Markierung zum Entriegeln und Verriegeln versehen ist, und wobei eine Kerbe in der stirnseitigen Abdeckung (40) vorgesehen ist, wobei die Linsenabdeckung (60) von der stirnseitigen Abdeckung (40) getrennt wird, wenn die Linsenabdeckung relativ zu der stirnseitigen Abdeckung (40) gedreht wird, bis die Markierung zum Entriegeln zusammen mit der Kerbe auf der stirnseitigen Abdeckung (40) ausgerichtet ist, und wobei die Linsenabdeckung auf der stirnseitigen Abdeckung (40) verriegelt wird, wenn die Linsenabdeckung (60) relativ zu der stirnseitigen Abdeckung (40) gedreht wird, bis die Markierung zum Verriegeln zusammen mit der Kerbe auf der stirnseitigen Abdeckung (40) ausgerichtet ist.

## Revendications

1. Lampe de courtoisie pour automobile, qui comprend une coque, une lampe à DEL (20), une carte de circuit de commande installée dans la coque, un ensemble barillet de lentille (50) et un ensemble de projection de motif (2), dans laquelle l'ensemble barillet de lentille comprend une partie supérieure (1) du barillet de lentille, une partie inférieure (4) du barillet de lentille et une première rainure (5) agencée dans la partie inférieure (4) du barillet de lentille, dans laquelle la première rainure (5) est utilisée pour placer l'ensemble de projection de motif (2), et la partie inférieure (4) du barillet de lentille est munie d'une pluralité de reliefs (3) ou de rainures (9) ;
de manière correspondante, la partie supérieure (1) du barillet de lentille est munie d'une pluralité de rainures (9) ou de reliefs (3) ; et l'ensemble de projection de motif (2) est placé dans la première rainure (5) de la partie inférieure (4) du barillet de lentille par la mise en prise des reliefs (3) et des rainures (9) ;
dans laquelle l'ensemble de projection de motif (2) comprend un support supérieur (6), un support inférieur (8) et une feuille de film (7), et dans laquelle le support inférieur (8) est muni d'une seconde rainure (11), et la feuille de film (7) est placée horizontalement dans la seconde rainure (11).

2. Lampe de courtoisie pour automobile selon la revendication 1, dans laquelle le support supérieur (6) et le support inférieur (8) sont bloqués et fixés par l'intermédiaire de saillies et d'évidements (12).

3. Lampe de courtoisie pour automobile selon la revendication 1, dans laquelle la coque comprend un corps (10) et un cache avant (40), dans laquelle une encoche est agencée sur le côté de la cavité pour loger la partie inférieure (4) du barillet de lentille dans le corps (10), et dans laquelle des dents antidérapantes sont agencées sur la paroi verticale extérieure de la partie inférieure (4) du barillet de lentille, et dans laquelle une partie des dents antidérapantes est visible à la position correspondant à l'encoche.

4. Lampe de courtoisie pour automobile selon la revendication 1, dans laquelle la coque comprend un corps (10) et un cache avant (40), dans laquelle le cache avant (40) est muni d'un trou traversant, et l'ensemble barillet de lentille (50) passe à travers le trou traversant et pénètre dans le corps (10) pour faire face à la lampe à DEL (20).

5. Lampe de courtoisie pour automobile selon la revendication 4, dans laquelle la lampe de courtoisie pour automobile inclut également un cache-lentille (60) recouvrant le trou traversant, qui est muni d'un repère de déverrouillage & de verrouillage, et dans laquelle une encoche est disposée dans le cache avant (40), dans laquelle, lorsque le cache-lentille est tourné par rapport au cache avant (40) jusqu'à ce que le repère de déverrouillage soit aligné sur l'encoche sur le cache avant (40), le cache-lentille (60) est séparé du cache avant (40), et lorsque le cache-lentille (60) est tourné par rapport au cache avant (40) jusqu'à ce que le repère de verrouillage soit aligné sur l'encoche sur le cache avant (40), le cache-lentille est fermé sur le cache avant (40).
